(19)

(11) **EP 2 963 165 B1**

(12) **EUROPEAN PATENT SPECIFICATION**

(45) Date of publication and mention of the grant of the patent: **07.07.2021 Bulletin 2021/27**

(21) Application number: **14756663.2**

(22) Date of filing: **07.02.2014**

(51) Int Cl.:
*D02G 3/04* (2006.01) *C08K 7/02* (2006.01)
*C08L 77/00* (2006.01) *D03D 1/00* (2006.01)
*D03D 15/00* (2021.01) *D04B 21/00* (2006.01)
*D06M 13/224* (2006.01) *D06M 15/227* (2006.01)
*D06M 15/53* (2006.01) *C08G 69/26* (2006.01)
*C08K 7/06* (2006.01) *D02G 3/40* (2006.01)
*D06M 101/36* (2006.01)

(86) International application number: **PCT/JP2014/052866**

(87) International publication number: **WO 2014/132776 (04.09.2014 Gazette 2014/36)**

(54) **COMPOSITE FIBER, FABRIC, KNITTED ARTICLE, AND COMPOSITE MATERIAL**

VERBUNDFASER, GEWEBE, STRICKWARE UND VERBUNDMATERIAL

FIBRE COMPOSITE, TISSU, ARTICLE TRICOTÉ ET MATÉRIAU COMPOSITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2013 JP 2013040251**

(43) Date of publication of application: **06.01.2016 Bulletin 2016/01**

(73) Proprietor: **Mitsubishi Gas Chemical Company, Inc.**
**Tokyo 100-8324 (JP)**

(72) Inventors:
- **MATSUMOTO Nobuhiko**
  **Hiratsuka-shi**
  **Kanagawa 254-0016 (JP)**
- **MITADERA Jun**
  **Hiratsuka-shi**
  **Kanagawa 254-0016 (JP)**

(74) Representative: **Vossius & Partner Patentanwälte Rechtsanwälte mbB**
**Siebertstrasse 3**
**81675 München (DE)**

(56) References cited:
**WO-A1-2006/115266** **WO-A1-2014/050303**
**JP-A- H09 324 331** **JP-A- H09 324 331**
**JP-A- S55 122 028** **JP-B1- 4 894 982**
**US-A- 6 051 316**

- **DATABASE WPI Week 201222 2012 Thomson Scientific, London, GB; AN 2012-D10968 XP002763322, -& JP 4 894982 B1 (MITSUBISHI GAS CHEM CO INC) 14 March 2012 (2012-03-14)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 963 165 B1

Printed by Jouve, 75001 PARIS (FR)

## Description

### TECHNICAL FIELD

The present invention relates to composite fibers comprising specific polyamide resin fibers and continuous reinforcing fibers. It also relates to weave fabrics and knitted fabrics prepared by using such composite fibers. Further, the present invention relates to composite materials obtainable by thermally processing the composite fibers, weave fabrics and knitted fabrics.

### BACKGROUND ART

Fiber-reinforced resin-based composite materials obtainable by combining a fibrous material with a matrix resin are light and have high rigidity so that molded articles using the fiber-reinforced resin-based composite materials have been widely employed as machine parts, electronic/electric equipment parts, parts/elements for vehicles, aerospace equipment parts.

The matrix resin used here is typically a thermosetting resin such as an unsaturated polyester resin or an epoxy resin because of mechanical strength, compatibility with the fibrous material, moldability. However, those materials using thermosetting resins have the critical disadvantage that those materials cannot be remelted and molded again.

Under these circumstances, patent document 1 discloses polyamide resin-based composite materials comprising a fibrous material impregnated with polyamide resin fibers, wherein the polyamide resin contains a diamine structural unit, 50 mol % or more of which is derived from xylylenediamine, and has a number average molecular weight (Mn) of 6,000 to 30,000, and 0.5 to 5 % by mass of the polyamide resin has a molecular weight of 1,000 or less.

### REFERENCES

### PATENT DOCUMENTS

Patent document 1: Japanese Patent No. 4894982

### SUMMARY OF THE INVENTION

### PROBLEMS TO BE SOLVED BY THE INVENTION

The polyamide resin-based composite materials described in patent document 1 above are prepared by impregnating a fibrous material with a polyamide resin. If a yarn-like fiber bundle (composite fiber), wherein fibrous polyamide resin fibers and continuous reinforcing fibers are dispersed, could be provided, the yarn-like fiber bundle could be readily molded into three-dimensional shapes to form molded articles having more complex shapes and could be expected to be applied to wider purposes because the yarn-like fiber bundle could be thermally processed while the yarn-like fiber bundle is in the form of a composite fiber or after the yarn-like fiber bundle has been converted into a weave fabric or knitted fabric. The present invention aims to solve such a challenge, thereby providing composite fibers in which polyamide resin fibers and continuous reinforcing fibers are dispersed.

### MEANS TO SOLVE THE PROBLEMS

As a result of our careful studies under these circumstances, we found that, in a composite fiber comprising (A) a polyamide resin fiber, (B) a continuous reinforcing fiber, and (a) a treating agent for the polyamide resin fiber (A), a specific polyamide resin is employed and the amount of the treating agent (a) for the polyamide resin fiber is controlled, and as a result, the composite fiber, wherein the polyamide resin fiber (A) and the continuous reinforcing fiber (B) are dispersed can be provided. Specifically, the problems described above were solved.

### ADVANTAGES OF THE INVENTION

The present invention made it possible to provide composite fibers in which a polyamide resin fiber and a continuous reinforcing fiber are dispersed.

### BRIEF EXPLANATION OF THE DRAWINGS

Fig. 1 is a schematic diagram showing a composite fiber of the present invention.
Fig. 2 is a schematic diagram showing embodiments according to which composite fibers are prepared.

THE MOST PREFERRED EMBODIMENTS OF THE INVENTION

The present invention will be explained in detail below. As used herein, each numerical range expressed by two values on both sides of "to" is used to mean the range including the values indicated before and after "to" as lower and upper limits.

As used herein, the fineness and the number of filaments refer to the average fineness and the average number of filaments measured at random ten points of each fiber respectively, unless otherwise specified.

The composite fibers of the present invention are composite fibers according to claim 1, comprising (A) a polyamide resin fiber made from a polyamide resin composition, (B) a continuous reinforcing fiber, and (a) a treating agent for the polyamide resin fiber (A); characterized in that the amount of the treating agent (a) is 0.1 to 2.0 % by mass of the polyamide resin fiber (A); and the polyamide resin composition comprises a polyamide resin containing a diamine structural unit, 50 mol % or more of which is derived from xylylenediamine, and having a number average molecular weight (Mn) of 6,000 to 30,000; and 0.5 to 5 % by mass of the polyamide resin has a molecular weight of 1,000 or less. When such a specific polyamide resin fiber (A) is used and the amount of the treating agent (a) for the polyamide resin fiber (A) is controlled at a specific amount, a composite fiber in which the polyamide resin fiber (A) and the continuous reinforcing fiber (B) are well dispersed can be obtained. In the composite fibers of the present invention, the polyamide resin fiber (A) and the continuous reinforcing fiber (B) are typically combined by the treating agent (a), more preferably by the treating agent (a) and a treating agent (b) to form a fiber bundle (composite fiber). The present invention has a technical significance in that the polyamide resin fiber (A) and the continuous reinforcing fiber (B) are dispersed.

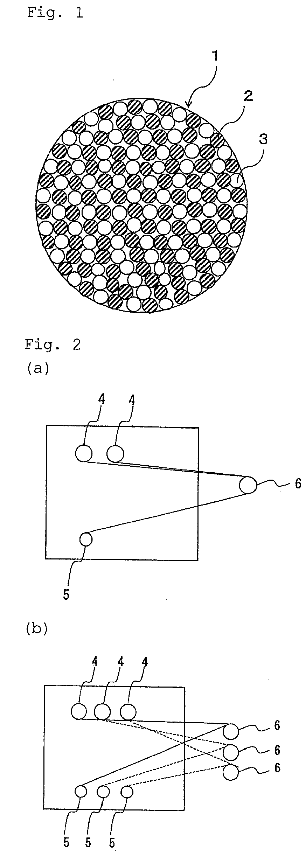

Fig. 1 is a schematic diagram showing a composite fiber of the present invention in section. In Fig. 1, 1 stands for composite fiber; 2 stands for polyamide resin fiber (A); 3 stands for continuous reinforcing fiber (B). Although the polyamide resin fiber (A) 2 and the continuous reinforcing fiber (B) 3 are shown to have approximately the same diameter for sake of convenience, the polyamide resin fiber (A) and the continuous reinforcing fiber (B) may not necessarily have the same diameter. Details about the polyamide resin fiber (A) and the continuous reinforcing fiber (B) will be described later.

Referring back to Fig. 1, according to the present invention, a fiber bundle (composite fiber 1) in which the polyamide resin fiber (A) 2 and the continuous reinforcing fiber (B) 3 are dispersed is formed. When the composite fiber having such a structure is thermally processed, a molded article can be obtained in which the continuous reinforcing fiber (B) are well dispersed, i.e., the continuous reinforcing fiber (B) are homogeneously dispersed. When such a composite material in which the continuous reinforcing fiber (B) is homogeneously dispersed is thermally processed, the resulting molded article has excellent properties such as mechanical strength (especially, tensile strength and flexural modulus). Especially, this advantage is remarkable when the composite fiber is thermally processed after the composite fiber has been converted into a knitted fabric or a weave fabric. To prepare such a composite fiber in which the continuous reinforcing fiber (B) are homogeneously dispersed, a specific polyamide resin is used and the treating agent (a) for the polyamide resin fiber (A) is controlled at a specific amount in the present invention. Further, more improved dispersity of the continuous reinforcing fiber (B) can be achieved by also controlling the amount of the treating agent (b) for the continuous reinforcing fiber (B).

The composite fibers of the present invention are typically prepared by using a polyamide resin fiber bundle composed of filaments of a polyamide resin fiber and a continuous reinforcing fiber bundle composed of filaments of a continuous reinforcing fiber. Preferably, the total fineness of the fibers used to prepare one composite fiber yarn (the sum of the total fineness of the polyamide resin fiber and the total fineness of the continuous reinforcing fiber used to prepare one composite fiber yarn) is 1000 to 100000 dtex, more preferably 1500 to 50000 dtex, even more preferably 2000 to 50000 dtex, especially preferably 3000 to 5000 dtex.

Preferably, the ratio between the total fineness of the polyamide resin fiber (A) and the total fineness of the continuous reinforcing fiber (B) used to prepare one composite fiber yarn (the total fineness of the polyamide resin fiber (A) / the total fineness of the continuous reinforcing fiber (b)) is 0.1 to 10, more preferably 0.1 to 6.0, even more preferably 0.8 to 2.0.

Preferably, the total number of filaments used to prepare one composite fiber yarn (the sum of the total number of filaments of the polyamide resin fiber (A) and the total number of filaments of the continuous reinforcing fiber (B)) is 100 to 100000 filaments, more preferably 1000 to 100000 filaments, even more preferably 1500 to 70000 filaments, further more preferably 2000 to 20000 filaments, still more preferably 2500 to 10000 filaments, specially preferably 3000 to 5000 filaments. When the total number of filaments is in such ranges, the composite fiber exhibits an improved ability to commingle fibers and achieves more excellent properties and texture as a composite material. Further, the composite fiber has less areas in which either fiber is concentrated and both fibers are likely to be dispersed more homogeneously.

Preferably, the ratio between the total number of filaments of the polyamide resin fiber (A) and the total number of filaments of the continuous reinforcing fiber (B) (the total number of filaments of the polyamide resin fiber (A) / the total number of filaments of the continuous reinforcing fiber (B)) used to prepare one composite fiber yarn is 0.001 to 1, more preferably 0.001 to 0.5, even more preferably 0.05 to 0.2. When the total number of filaments is in such ranges, the composite fiber exhibits an improved capability of combining filaments and achieves more excellent properties and texture as a composite material. When the total number of filaments is in the ranges indicated above, the polyamide resin fiber (A) and the continuous reinforcing fiber (B), which should preferably be dispersed more homogeneously in the composite fiber, are also likely to be dispersed more homogeneously.

Preferably, the dispersity of the continuous reinforcing fiber (B) in the composite fibers of the present invention is 40 to 100, more preferably 60 to 100, especially preferably 65 to 100. When the dispersity of the continuous reinforcing fiber (B) is in such ranges, the composite fiber exhibits more homogeneous properties and the resulting molded article exhibits more improved appearance. Further, the molded article prepared by using the composite fiber has more excellent mechanical properties.

As used herein, the dispersity is an index showing how homogeneously the polyamide resin fiber (A) and the continuous reinforcing fiber (B) are dispersed in a composite fiber and defined by the mathematical formula below:

$$D(\%)=(1-(Lcf+Lpoly)/Ltot)*100$$

wherein D represents the dispersity, Ltot represents a cross-sectional area of one commingled yarn of the composite fiber in a cross-section taken at right angles to the longitudinal direction of the fiber, Lcf represents the total of areas of 31400 $\mu m^2$ or more solely occupied by the continuous reinforcing fiber in the cross-section of the composite fiber, and Lpoly represents the total of areas of 31400 $\mu m^2$ or more solely occupied by the resin fiber in the cross-section of the composite fiber. The commingled yarn was measured at the cross-section perpendicular to the longitudinal direction of the fiber. The areas are measured by using a digital microscope.

Higher values of the dispersity D mean that the polyamide resin fiber (A) and the continuous reinforcing fiber (B) are dispersed more homogeneously.

In addition to the polyamide resin fiber (A), the continuous reinforcing fiber (B), the treating agent (a) and the treating agent (b), the composite fibers of the present invention may contain other components such as short carbon fibers, carbon nanotubes, fullerenes, cellulose microfibers, talc and mica. These other components should preferably be contained in an amount of 5 % by mass or less of the composite fiber.

Next, the polyamide resin fiber (A), the treating agent therefor (a), the continuous reinforcing fiber (B) and the treating agent therefor (b) are explained in detail.

<Polyamide resin fiber (A)>

This is a fibrous material made from a polyamide resin composition comprising a polyamide resin containing a diamine structural unit, 50 mol % or more of which is derived from xylylenediamine, and having a number average molecular weight (Mn) of 6,000 to 30,000; and 0.5 to 5 % by mass of the polyamide resin has a molecular weight of 1,000 or less.

<<Characteristics of the polyamide resin fiber (A)>>

As used herein, the polyamide resin fiber (A) refers to a polyamide resin fiber having a fiber length greater than 6 mm and which is obtainable by forming the polyamide resin composition into a continuous fiber. The average fiber length of the polyamide resin fiber used in the present invention is preferably in the range of 1 to 20,000 m, more preferably 100 to 10,000 m, even more preferably 1,000 to 7,000 m to improve moldability.

Typically, the polyamide resin fiber (A) used in the present invention is prepared by using a polyamide resin fiber bundle composed of polyamide resin fiber filaments, wherein the total fineness per polyamide resin fiber bundle is preferably 40 to 600 dtex, more preferably 50 to 500 dtex, even more preferably 200 to 400 dtex. When the total fineness is in such ranges, the dispersion state of the polyamide resin fiber (A) in the resulting composite fiber further improves. Preferably, the number of filaments constituting the polyamide resin fiber bundle is 1 to 200 filaments, more preferably 1 to 50 filaments, even more preferably 5 to 45 filaments, especially preferably 20 to 40 filaments. When the number of filaments is in such ranges, the dispersion state of the polyamide resin fiber (A) in the resulting composite fiber further improves.

In the present invention, the number of such polyamide resin fiber bundles used to prepare one composite fiber yarn is preferably in the range of 1 to 100 bundles, more preferably in the range of 1 to 50 bundles, even more preferably in the range of 3 to 15 bundles. When the number of such polyamide resin fiber bundles is in such ranges, the advantages of the present invention are achieved more effectively.

Preferably, the total fineness of the polyamide resin fiber (A) used to prepare one composite fiber yarn is 200 to 12000 dtex, more preferably 1000 to 3000 dtex. When the total fineness is in such ranges, the advantages of the present invention are achieved more effectively.

Preferably, the total number of filaments of the polyamide resin fiber (A) used to prepare one composite fiber yarn is 10 to 2000 filaments, more preferably 20 to 1600 filaments, even more preferably 200 to 350 filaments. When the total number of filaments is in such ranges, the composite fiber exhibits an improved capability of combining filaments and achieves more excellent properties and texture as a composite material. When the number of filaments is 10 filaments or more, opened fiber bundles are likely to be combined more homogeneously. When it is 2000 filaments or less, either fiber is less likely to be concentrated and a more homogeneous composite fiber can be obtained.

Preferably, the polyamide resin fiber bundle used in the present invention has a tensile strength of 2 to 10 gf/d. When the polyamide resin fiber bundle is in such a range, the composite fiber tends to be more readily prepared.

<<Treating agent (a) for the polyamide resin fiber (A)>>

The treating agent (a) for the polyamide resin fiber (A) used in the present invention has the function to size filaments of the polyamide resin fiber (A) into a bundle. Examples of the treating agent (a) include compounds having a polar functional group such as an ester bond, an ether bond, an amide bond, and an acid and interacting with the amide bond of the polyamide resin. Examples of the treating agent (a) preferably include ester compounds, alkylene glycol compounds, polyolefin compounds, and phenyl ether compounds, more specifically unsaturated fatty acid esters, saturated fatty acid esters, mixtures of saturated fatty acid esters/unsaturated fatty acid esters, glycerol esters, ethylene glycol fatty acid esters, propylene glycol fatty acid esters, and polyoxyethylene hydrogenated castor oil.

The amount of the treating agent for the polyamide resin fiber (A) is 0.1 to 2 % by mass, more preferably 0.5 to 1.5 % by mass. When the amount of the treating agent is in such ranges, a more homogeneous composite fiber is likely to be obtained because the polyamide resin fiber (A) are well dispersed in a composite fiber formed after the polyamide resin fiber bundle and the continuous reinforcing fiber bundle are opened. In addition, the polyamide resin fiber (A) can be more effectively prevented from breakage due to the friction between the polyamide resin fiber (A) and a machine or the friction between filaments during the preparation of a composite fiber. Further, the polyamide resin fiber (A) can be more effectively prevented from breakage due to the mechanical stress applied to the polyamide resin fiber (A) to obtain a homogeneous composite fiber.

<<Method for treating the polyamide resin fiber (A) with the treating agent (a)>>

In the method for treating the polyamide resin fiber (A) with the treating agent (a) as for example, a solution containing the treating agent (a) dissolved therein may be prepared and applied to deposit the treating agent (a) on a surface of the polyamide resin fiber (A), or the treating agent may be sprayed by air-blowing.

<<Polyamide resin composition>>

The polyamide resin fiber (A) of the present invention is made from a polyamide resin composition comprising a polyamide resin as a major component (typically comprising a polyamide resin at 90 % by mass or more of the composition) . The polyamide resin is a polyamide resin containing a diamine structural unit, 50 mol % or more of which is derived from xylylenediamine, and having a number average molecular weight (Mn) of 6,000 to 30,000; and 0.5 to 5 % by mass of the polyamide resin has a molecular weight of 1,000 or less.

The polyamide resin used in the present invention is a fibrous material made from a polyamide resin containing a diamine structural unit (a structural unit derived from a diamine), 50 mol % or more of which is derived from xylylenediamine, i.e., a xylylenediamine-based polyamide resin containing a diamine, 50 mol % or more of which is derived from xylylenediamine, and which has been polycondensed with a dicarboxylic acid.

Preferably, the polyamide resin is a xylylenediamine-based polyamide resin comprising a diamine structural unit, 70 mol % or more, more preferably 80 mol % or more of which is derived from m-xylylenediamine and/or p-xylylenediamine, and a dicarboxylic acid structural unit (a structural unit derived from a dicarboxylic acid), preferably 50 mol % or more, more preferably 70 mol % or more, especially 80 mol % ormore of which is derived from a straight chain aliphatic $\alpha,\omega$-dicarboxylic acid preferably containing 4 to 20 carbon atoms.

Examples of diamines other than m-xylylenediamine and p-xylylenediamine that can be used as starting diamine components of the xylylenediamine-based polyamide resin include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decane and bis (aminomethyl) tricyclodecane; diamines having an aromatic ring such as bis(4-aminophenyl)ether, p-phenylenediamine and bis (aminomethyl) naphthalene. and they can be used alone or as a mixture of two or more of them. When a diamine other than xylylenediamine is used as a diamine component, it should be used at a proportion of 50 mol % or less, preferably 30 mol % or less, more preferably 1 to 25 mol %, especially preferably 5 to 20 mol % of the diamine structural unit.

Examples of preferred straight chain aliphatic $\alpha,\omega$-dicarboxylic acids containing 4 to 20 carbon atoms for use as starting dicarboxylic acid components of the polyamide resin include, for example, aliphatic dicarboxylic acids such as succinic acid, glutaric acid, pimelic acid, suberic acid, azelaic acid, adipic acid, sebacic acid, undecanoic diacid, dodecanoic diacid, and they can be used alone or as a mixture of two or more of them, among which adipic acid or sebacic acid, especially sebacic acid is preferred because the resulting polyamide resin has a melting point in a range suitable for molding.

Examples of dicarboxylic acid components other than the straight chain aliphatic $\alpha,\omega$-dicarboxylic acids containing 4 to 20 carbon atoms listed above include phthalic acid compounds such as isophthalic acid, terephthalic acid and orthophthalic acid; isomeric naphthalenedicarboxylic acids such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid and 2,7-naphthalenedicarboxylic acid; and they can be used alone or as a mixture of two or more of them.

A preferred dicarboxylic acid for use as a dicarboxylic acid component other than the straight chain aliphatic $\alpha,\omega$-dicarboxylic acids containing 4 to 20 carbon atoms is isophthalic acid because of moldability and barrier properties. The proportion of isophthalic acid is preferably 30 mol % or less, more preferably 1 to 30 mol %, especially preferably in the range of 5 to 20 mol % of the dicarboxylic acid structural unit.

In addition to the diamine components and dicarboxylic acid components, lactams such as $\varepsilon$-caprolactam and laurolactam or aliphatic aminocarboxylic acids such as aminocaproic acid and aminoundecanoic acid can also be used as components to be copolymerized to make up the polyamide resin so far as the advantages of the present invention are not adversely affected.

The most preferred polyamide resins are poly(m-xylylene sebacamide) resins, poly (p-xylylene sebacamide) resins, and mixed poly(m-xylylene/p-xylylene sebacamide) resins obtained by polycondensing a xylylenediamine mixture of m-xylylenediamine and p-xylylenediamine with sebacic acid. These polyamide resins tend to have especially improved moldability.

In the present invention, the polyamide resin has a number average molecular weight (Mn) of 6,000 to 30,000, and 0.5 to 5 % by mass of the polyamide resin has a molecular weight of 1,000 or less.

If the number average molecular weight (Mn) is outside the range of 6,000 to 20,000, the resulting composite material or molded articles prepared therefrom exhibit poor strength. The number average molecular weight (Mn) is preferably 8,000 to 28,000, more preferably 9,000 to 26,000, even more preferably 10,000 to 24,000, still more preferably 11,000 to 22,000, especially preferably 12,000 to 20,000. When the number average molecular weight is in such ranges, heat resistance, modulus of elasticity, dimensional stability, and moldability are improved.

The number average molecular weight (Mn) here is calculated from the terminal amino group concentration $[NH_2]$ ($\mu$eq/g) and the terminal carboxyl group concentration [COOH] ($\mu$eq/g) of a polyamide resin by the equation below:

$$\text{Number average molecular weight (Mn)} = 2{,}000{,}000/([COOH]+[NH_2]).$$

Further, 0.5 to 5 % by mass of the polyamide resin should has a molecular weight of 1,000 or less, whereby the resulting composite material and molded articles prepared therefrom have good strength and low warpage because the impregnation of the polyamide resin improves and therefore, the flowability of the polyamide resin between reinforcing fiber filaments improves to reduce voids during molding when such low molecular weight components are contained in such a range. If the content of these low-molecular weight components exceeds 5 % by mass, they bleed to result in low strength and poor surface appearance.

The content of the polyamide resin having a molecular weight of 1,000 or less is preferably 0.6 to 4.5 % by mass, more preferably 0.7 to 4 % by mass, even more preferably 0.8 to 3.5 % by mass, especially preferably 0.9 to 3 % by mass, most preferably 1 to 2.5 % by mass.

The content of low-molecular weight components having a molecular weight of 1,000 or less can be controlled by regulating melt polymerization conditions such as the temperature or pressure at which the polyamide resin is polymerized or the rate of dropwise addition of the diamine. Especially, the polyamide resin can be controlled at any proportion by depressurizing the inside of the reactor at a late stage of melt polymerization to remove the low-molecular weight components. Alternatively, the low-molecular weight components may be removed by extracting the polyamide resin prepared by melt polymerization with hot water or the low-molecular weight components may be removed by further solid state polymerization under reduced pressure after melt polymerization. During the solid state polymerization, the low-molecular weight components can be controlled at any content by regulating the temperature or the degree of vacuum.

Alternatively, the content can also be controlled by adding a low-molecular weight component having a molecular weight of 1,000 or less to the polyamide resin later.

The amount of the polyamide resin having a molecular weight of 1,000 or less can be determined by gel permeation chromatography (GPC) as a relative value equivalent to the amount of poly (methyl methacrylate) (PMMA) used as a standard by employing the instrument "HLC-8320GPC" available from Tosoh Corporation and two "TSK gel Super HM-H" columns eluting with 10 mmol/l sodium trifluoroacetate in hexafluoroisopropanol (HFIP) under conditions of a resin concentration of 0.02 % by mass, a column temperature of 40 °C, a flow rate of 0.3 ml/min and detection with a refractive index detector (RI) . A calibration curve is generated from measurements of six PMMA standards dissolved in HFIP.

In the polyamide resin composition, 0.01 to 1 % by mass of the polyamide resin preferably consists of cyclic compounds (polyamide resin). As used herein, the term "cyclic compound" refers to a compound in which a ring is formed by a salt composed of a diamine component and a dicarboxylic acid component used as starting materials of a polyamide resin, and which can be quantified by the following method.

Pellets of the polyamide resin are ground in an ultracentrifugal mill and passed through a sieve of φ0.25 mm to weigh out 10 g of a powder sample of ϕ0.25 mm or less in a cylindrical paper filter. Then, the sample is extracted with 120 ml of methanol for 9 hours by the Soxhlet method, and the resulting extract is concentrated to 10 ml in an evaporator with care to avoid evaporation to dryness. If an oligomer precipitates during then, the oligomer should be removed by passing it through a PTFE filter as appropriate. The resulting extract is diluted 50-fold with methanol and subjected to a quantitative analysis using a high performance liquid chromatograph HPLC from Hitachi High-Technologies Corporation to determine the content of cyclic compounds.

When cyclic compounds are contained in the range indicated above, the resulting composite material and molded articles prepared therefrom tend to have good strength and low warpage, thereby further improving dimensional stability.

More preferably, the amount of cyclic compounds contained is 0.05 to 0.8 % by mass, even more preferably 0.1 to 0.5 % by mass of the polyamide resin.

Polyamide resins prepared by melt polymerization often contain a significant amount of cyclic compounds, which are typically removed by hot water extraction. The amount of cyclic compounds can be controlled by regulating the extent of the hot water extraction. Alternatively, the amount of cyclic compounds can also be controlled by regulating the pressure during melt polymerization.

Preferably, the polyamide resin used in the present invention has a molecular weight distribution (weight average molecular weight / number average molecular weight (Mw/Mn)) of 1.8 to 3.1. The molecular weight distribution is more preferably 1.9 to 3.0, even more preferably 2.0 to 2.9. When the molecular weight distribution is in such ranges, a composite material having excellent mechanical properties tends to be readily obtained. The molecular weight distribution of the polyamide resin can be controlled by, for example, appropriately selecting the type and the amount of the initiator or catalyst used during polymerization and polymerization reaction conditions such as reaction temperature, pressure, period. Alternatively, the molecular weight distribution can also be controlled by mixing multiple types of polyamide resins having different average molecular weights obtained under different polymerization conditions or fractionally precipitating the polyamide resin obtained after polymerization.

The molecular weight distribution can be determined by GPC analysis, specifically as a relative value equivalent to the molecular weight distribution of poly(methyl methacrylate) used as a standard by employing the instrument "HLC-8320GPC" available from Tosoh Corporation and two "TSK gel Super HM-H" columns available from Tosoh Corporation eluting with 10 mmol/l sodium trifluoroacetate in hexafluoroisopropanol (HFIP) under conditions of a resin concentration of 0.02 % by mass, a column temperature of 40 °C, a flow rate of 0.3 ml/min and detection with a refractive index detector (RI). A calibration curve is generated from measurements of six PMMA standards dissolved in HFIP.

Further, the polyamide resin preferably has a melt viscosity of 50 to 1200 Pa·s as measured under conditions of a temperature of the melting point of the polyamide resin plus 30 °C, a shear rate of 122 $sec^{-1}$, and a moisture content of the polyamide resin of 0.06 % by mass or less. When the melt viscosity is in such a range, the polyamide resin can be readily converted into a film or fiber. If the polyamide resin has two or more melting points as described later, the temperature at the top of an endothermic peak on the higher temperature side is taken as the melting point to perform the measurement.

The melt viscosity is more preferably in the range of 60 to 500 Pa·s, even more preferably 70 to 100 Pa·s.

The melt viscosity of the polyamide resin can be controlled by, for example, appropriately selecting the inlet ratio of the starting dicarboxylic acid component and diamine component, as well as the polymerization catalyst, molecular weight modifier, polymerization temperature and polymerization period.

Further, the retention of the flexural modulus upon water absorption of the polyamide resin is preferably 85 % or more. When the retention of the flexural modulus upon water absorption is in such a range, the resulting composite material and molded articles prepared therefrom tend to suffer less loss of properties at high temperature and high humidity and therefore less deformation such as warpage.

The retention of the flexural modulus upon water absorption here is defined as the ratio (%) of the flexural modulus of a bending test specimen of a polyamide resin upon absorption of 0.5 % by mass of water to the flexural modulus upon absorption of 0.1 % by mass of water, and higher values of this factor mean that the flexural modulus is less likely to decrease even if water is absorbed.

More preferably, the retention of the flexural modulus upon water absorption is 90 % or more, even more preferably 95 % or more.

The retention of the flexural modulus upon water absorption of the polyamide resin can be controlled by, for example, the mixing ratio of p-xylylenediamine and m-xylylenediamine, wherein higher proportions of p-xylylenediamine can improve the retention of the flexural modulus. Alternatively, the retention of the flexural modulus upon water absorption can also be controlled by controlling the degree of crystallinity of the bending test specimen.

Preferably, the polyamide resin has a water absorption rate of 1 % by mass or less, more preferably 0.6 % by mass or less, even more preferably 0.4 % by mass or less, when the polyamide resin is immersed in water at 23 °C for one week and then taken out and wiped to remove water and immediately after then, the water absorption rate is determined. When the water absorption rate is in such ranges, the resulting composite material and molded articles prepared therefrom are readily prevented from deformation due to water absorption, and foaming is reduced during the molding of the composite material under heat and pressure, whereby molded articles with less bubbles can be obtained.

Further, the polyamide resin is favorably used when the polyamide resin preferably has a terminal amino group ($[NH_2]$) concentration of less than 100 μeq/g, more preferably 5 to 75 μeq/g, even more preferably 10 to 60 μeq/g and preferably has a terminal carboxyl group ([COOH]) concentration of less than 150 μeq/g, more preferably 10 to 120 μeq/g, even more preferably 10 to 100 μeq/g. The use of a polyamide resin having such terminal group concentrations tends to readily stabilize the viscosity during the conversion of the polyamide resin into a film or a fiber and to improve the reactivity with the carbodiimide compounds described later.

Further, the ratio of the terminal amino group concentration to the terminal carboxyl group concentration ($[NH_2]$/[COOH]) is preferably 0.7 or less, more preferably 0.6 or less, especially preferably 0.5 or less. If this ratio is greater than 0.7, the molecular weight may be hard to control during the polymerization of the polyamide resin.

The terminal amino group concentration can be determined by dissolving 0.5 g of a polyamide resin in 30 ml of a phenol/methanol (4:1) mixed solution with stirring at 20 to 30 °C and titrating the solution with 0.01 N hydrochloric acid. Similarly, the terminal carboxyl group concentration can be calculated as follows: 0.1 g of a polyamide resin is dissolved in 30 ml of benzyl alcohol at 200 °C and 0.1 ml of a phenol red solution is added in the range of 160 °C to 165 °C. This solution is titrated with a titration solution of 0.132 g of KOH in 200 ml of benzyl alcohol (0.01 mol/l expressed as KOH content) until the endpoint is reached at which the color changes from yellow to red completely.

Preferably, the polyamide resin of the present invention has a molar ratio of the diamine component to the dicarboxylic acid component reacted (the number of moles of the reacted diamine component / the number of moles of the reacted dicarboxylic acid component; hereinafter sometimes referred to as "reaction molar ratio") of 0.97 to 1.02. When the molar ratio is in such a range, the molecular weight or molecular weight distribution of the polyamide resin can be readily controlled in any range.

More preferably, the reaction molar ratio is less than 1.0, even more preferably less than 0.995, especially preferably less than 0.990, and the lower limit is more preferably 0.975 or more, even more preferably 0.98 or more.

The reaction molar ratio (r) here is determined by the equation below:

$$r = (1-cN-b(C-N))/(1-cC+a(C-N))$$

wherein:

- a: M1/2
- b: M2/2
- c: 18.015 (the molecular weight of water (g/mol))
- M1: the molecular weight of the diamine (g/mol)
- M2: the molecular weight of the dicarboxylic acid (g/mol)
- N: terminal amino group concentration (eq/g)
- C: terminal carboxyl group concentration (eq/g).

It should be understood that when the polyamide resin is synthesized from monomers having different molecular weights as a diamine component and a dicarboxylic acid component, M1 and M2 are calculated depending on the proportions (molar ratio) of the starting monomers. It should also be understood that if the synthesis vessel is a completely closed system, the molar ratio of loaded monomers equals the reaction molar ratio, but the inlet molar ratio may not always equal the reaction molar ratio because the actual synthesizer cannot be a completely closed system. Moreover, the inlet molar ratio may not always equal the reaction molar ratio because loaded monomers may not completely react. Thus, the reaction molar ratio refers to the molar ratio of actually reacted monomers determined from the terminal group concentrations of a finished polyamide resin.

The reaction molar ratio of the polyamide resin can be controlled by appropriately selecting reaction conditions such as the inlet molar ratio of starting dicarboxylic acid component and diamine component, reaction period, reaction temperature, the rate of dropwise addition of xylylenediamine, the pressure in the vessel, the timing of starting depressurization.

When the polyamide resin is prepared by the so-called salt process, a reaction molar ratio of 0.97 to 1.02 may be specifically achieved by selecting the ratio of the starting diamine component / the starting dicarboxylic acid component in this range and allowing the reaction to proceed sufficiently far, for example. In the case of a process involving continuous dropwise addition of a diamine to a molten dicarboxylic acid, it may be achieved by not only selecting an inlet ratio in this range but also controlling the amount of the diamine to be refluxed during the dropwise addition of the diamine and removing the added diamine outside the reaction system. Specifically, the diamine may be removed outside the system by controlling the temperature in the reflux column in an optimal range or appropriately controlling the shapes and amounts of packings in the packed column such as the so-called Raschig rings, Lessing rings and saddles.

Alternatively, unreacted diamine can also be removed outside the system by reducing the reaction period after dropwise addition of the diamine. Further, unreacted diamine can also be removed outside the system as appropriate by controlling the rate of dropwise addition of the diamine. These methods allow the reaction molar ratio to be controlled in a predetermined range even if the inlet ratio is outside a desired range.

In the process for preparing the polyamide resin the polyamide resin is prepared by using known methods and polymerization conditions. During the polycondensation of the polyamide resin, a small amount of a monoamine or monocarboxylic acid may be added as a molecular weight modifier. For example, the polyamide resin is prepared by heating a salt composed of a diamine component containing xylylenediamine and a dicarboxylic acid such as adipic acid, sebacic acid under pressure in the presence of water to polymerize it in a molten state while removing the added water and condensed water. Alternatively, the polyamide resin can also be prepared by directly adding xylylenediamine to a dicarboxylic acid in a molten state and polycondensing them at atmospheric pressure. In the latter case, polycondensation proceeds by continuously adding the diamine to the dicarboxylic acid while heating the reaction system to a reaction temperature not lower than the melting points of the oligoamide and polyamide produced to maintain the reaction system in a homogeneous liquid state.

Further, the polyamide resin may also be subjected to solid state polymerization after the polyamide resin is prepared by melt polymerization. The method of solid state polymerization can be performed using known methods and polymerization conditions.

In the present invention, the polyamide resin preferably has a melting point of 150 to 310 °C, more preferably 180 to 300 °C. Further, the polyamide resin preferably has a glass transition point of 50 to 100 °C, more preferably 55 to 100 °C, especially preferably 60 to 100 °C. When the melting point is in such ranges, heat resistance tends to improve.

As used herein, the melting point refers to the temperature at the top of the endothermic peak during heating observed by DSC (differential scanning calorimetry) . The glass transition point refers to the glass transition point determined by melting a sample by heating the sample once to eliminate the influence of thermal history on crystallinity and then heating the sample again. The melting point can be determined from the temperature at the top of the endothermic peak observed by using, for example, "DSC-60" available from SHIMADZU CORPORATION when a sample of about 5 mg is melted by heating from room temperature to a temperature equal to or higher than an expected melting point at a rate of 10 °C/min under a nitrogen stream of 30 ml/min. Then, the melted polyamide resin is rapidly cooled with dry ice and heated again to a temperature equal to or higher than the melting point at a rate of 10 °C/min, whereby the glass transition point can be determined.

Further, the polyamide resin also preferably has at least two melting points. Polyamide resins having at least two melting points are preferred because heat resistance and moldability during the molding of a composite material tend to improve.

Polyamide resins having at least two melting points preferably include polyamide resins comprising a diamine structural unit, 70 mol % or more of which is derived from xylylenediamine, and a dicarboxylic acid structural unit, 50 mol % or more of which is derived from sebacic acid, wherein the xylylenediamine unit contains 50 to 100 mol % of a p-xylylenediamine-derived unit and 0 to 50 mol % of a m-xylylenediamine-derived unit, and which have a number average molecular weight (Mn) of 6,000 to 30,000 and at least two melting points.

The two or more melting points here are typically in the range of 250 to 330 °C, preferably 260 to 320 °C, more preferably 270 to 310 °C, especially preferably 275 to 305 °C. When the polyamide resin has two or more melting points preferably within such temperature ranges, it has good heat resistance and moldability during the molding of a composite material.

Such a polyamide resin having at least two melting points can preferably be obtained by applying the method (1), (2) or (3) below, or any combination of these methods during melt polymerization.

(1) A method comprising the following steps during the preparation of a polyamide resin, i.e., the steps of collecting the polyamide resin in the form of strands from the polymerization reaction vessel in a temperature range between the melting point of the polyamide resin and the melting point plus 20 °C; and cooling the collected polyamide resin in the form of strands in cooling water at 0 to 60 °C.
(2) A method comprising the following steps prior to the step of collecting the polyamide resin in the form of strands from the polymerization reaction vessel, i.e., the steps of melting a dicarboxylic acid; continuously adding dropwise a diamine to the melted dicarboxylic acid; holding the temperature between the melting point of the polyamide resin and the melting point plus 30 °C for 0 to 60 minutes after completion of the dropwise addition of the diamine; and further continuing the polycondensation reaction under negative pressure.
(3) A method comprising the following steps prior to the step of collecting the polyamide resin in the form of strands from the polymerization reaction vessel, i.e., the steps of maintaining a salt composed of a dicarboxylic acid and a diamine in a molten state under pressure; raising the temperature under depressurization; and holding the temperature between the melting point of the polyamide resin and the melting point plus 30 °C for 0 to 60 minutes.

The melting point in (1) to (3) above refers to the temperature at the top of an endothermic peak on the higher temperature side among multiple endothermic peaks observed by DSC.

The method (1) above comprises cooling the polyamide resin in a specific temperature range as it is collected in the form of strands under specific temperature conditions, whereby it is thought that when the polyamide resin is collected and cooled under such conditions, the polyamide resin of a single composition can adopt multiple stabilized crystal structures having different melting points. The temperature of the polyamide resin at which it is collected in the form of strands is preferably between the melting point and the melting point plus 15 °C. The strands are cooled in cooling water at 0 to 60 °C, preferably 10 to 50 °C, more preferably 20 to 45 °C.

Further, the time for which the strands are contacted with cooling water is preferably about 2 to 60 seconds, more preferably 5 to 50 seconds.

It is thought that when such ranges are selected, the polyamide resin of a single composition can adopt multiple stabilized crystal structures having different melting points. If the cooling time is 2 seconds or less, cooling is insufficient so that preferred crystal structures may not be stabilized or the strands may wind around the cutter during pelletizing, thereby leading to low productivity. If the cooling time exceeds 60 seconds, however, the resulting polyamide resin may have an excessively high moisture content or other problems may occur. The cooling time here can be controlled as appropriate by regulating the distance along which the strands are in contact with water in a cooling water bath, the length of the cooling water bath, or the time for which cooling water is sprayed or atomized on the strands or other factors.

Further, the strand take-up rate is preferably 100 to 300 m/min, more preferably 120 to 280 m/min, even more preferably 140 to 260 m/min, especially preferably 150 to 250 m/min. It is thought that when such ranges are selected, the polyamide resin can adopt multiple stabilized crystal structures having different melting points. Further, such ranges are preferred because the resulting pellets will not have an excessively high moisture content. Moreover, such ranges are also preferred because they facilitate pelletizing, thereby improving productivity. The strand take-up rate can be controlled by regulating the gear speed of the pelletizer or the pressure in the reaction vessel during collection.

The method (2) above comprises the following steps prior to the step of collecting the polyamide resin in the form of strands from the polymerization reaction vessel, i.e., the steps of melting a dicarboxylic acid; continuously adding dropwise a diamine to the melted dicarboxylic acid; holding the temperature between the melting point of the polyamide resin and the melting point plus 30 °C for 0 to 60 minutes after completion of the dropwise addition of the diamine; and further continuing the polycondensation reaction under negative pressure.

The step of melting a dicarboxylic acid may comprise introducing a solid dicarboxylic acid into the reaction vessel and melting it by heating or introducing a premelted dicarboxylic acid into the reaction vessel, prior to the polycondensation step.

The step of continuously adding dropwise a diamine to the melted dicarboxylic acid preferably comprises continuously raising the temperature in the reaction vessel as the amount of the diamine added dropwise increases while controlling the temperature in the reaction vessel between a temperature at which the produced polyamide oligomer does not solidify and that temperature plus 30 °C. Preferably, the temperature in the reaction vessel reaches a temperature between the melting point of the polyamide resin and the melting point plus 30 °C at an instant when the entire amount of the diamine has been completely added dropwise. During this step, the inside of the reaction vessel is preferably purged with nitrogen. Also during this step, the contents of the reaction vessel are preferably stirred by a stirring impeller to establish a homogeneously fluidized state in the reaction vessel.

Preferably, the inside of the reaction vessel is also pressurized during this step, preferably at 0.1 to 1 MPa, more preferably 0.2 to 0.6 MPa, even more preferably 0.3 to 0.5 MPa. It may be pressurized with nitrogen or water vapor. Through such a step, a polyamide resin having homogeneous properties can be produced with high productivity.

The method (2) also comprises the steps of holding the temperature between the melting point of the polyamide resin and the melting point plus 30 °C for 0 to 60 minutes, and continuing the polycondensation reaction under negative pressure, whereby the polyamide resin obtained through these steps tends to be likely to have multiple melting points.

It is not preferred that the step of holding the temperature between the melting point of the polyamide resin and the melting point plus 30 °C takes place for more than 60 minutes, because the polyamide resin may have a single melting point. The step of holding the temperature between the melting point of the polyamide resin and the melting point plus 30 °C more preferably takes place for 1 to 40 minutes, even more preferably 1 to 30 minutes, especially preferably 1 to 20 minutes.

In the step of continuing the polycondensation reaction under negative pressure, the pressure is preferably 0.05 MPa to less than atmospheric pressure, more preferably 0.06 to 0.09 MPa, even more preferably 0.07 to 0.085 MPa. The time for this step is preferably 1 to 60 minutes, more preferably 1 to 40 minutes, even more preferably 1 to 30 minutes, especially preferably 1 to 20 minutes. The reaction temperature is preferably between the melting point and the melting point plus 30 °C, more preferably between the melting point and the melting point plus 20 °C. When the polycondensation reaction is continued under the negative pressure conditions indicated above, the polyamide resin can be controlled to have a desired molecular weight and multiple stabilized melting points.

The method (3) comprises the steps of maintaining a salt composed of a dicarboxylic acid and a diamine in a molten state under pressure; raising the temperature under depressurization; and holding the temperature between the melting point of the polyamide resin and the melting point plus 30 °C for 0 to 60 minutes.

The steps of maintaining a salt composed of a dicarboxylic acid and a diamine in a molten state under pressure; and raising the temperature under depressurization take place according to a conventional salt process, wherein the step of maintaining a salt composed of a dicarboxylic acid and a diamine in a molten state under pressure comprises maintaining it in a molten state preferably for 60 to 300 minutes, more preferably 90 to 240 minutes while controlling the inside of the reaction vessel preferably at a temperature between the melting point of the polyamide oligomer and the melting point plus 30 °C, more preferably between the melting point of the polyamide oligomer and the melting point plus 20 °C, and preferably at a pressure of 1 to 2 MPa, more preferably 1.5 to 1.9 MPa.

The step of raising the temperature under depressurization involves depressurization and heating under conditions of a depressurization rate of preferably 1 to 2 MPa/hour, more preferably 1.5 to 1.8 MPa/hour, and a heating rate of preferably 10 to 100 °C/hour, more preferably 20 to 80 °C/hour. The pressure during the holding step after depressurization and heating is preferably 0.05 MPa to less than atmospheric pressure, more preferably 0.06 to 0.09 MPa, even more preferably 0.07 to 0.085 MPa. The time for this step is preferably 1 to 60 minutes, more preferably 1 to 40 minutes, even more preferably 1 to 30 minutes, especially preferably 1 to 20 minutes. Further, the temperature during this step is preferably between the melting point and the melting point plus 30 °C, more preferably between the melting point and the melting point plus 20 °C.

The method further comprises the step of holding the temperature between the melting point of the polyamide resin and the melting point plus 30 °C for 0 to 60 minutes. The polyamide resin obtained through these steps can be a polyamide resin having multiple melting points. It is not preferred that the step of holding the temperature between the melting point of the polyamide resin and the melting point plus 30 °C takes place for more than 60 minutes, because the polyamide resin may have a single melting point. The step of holding the temperature between the melting point of the polyamide resin and the melting point plus 30 °C more preferably takes place for 1 to 40 minutes, even more preferably 1 to 30 minutes, especially preferably 1 to 20 minutes.

The polyamide resin composition used in the present invention can also contain polyamide resins other than the xylylenediamine-based polyamide resins described above and elastomer components. The other polyamide resins include polyamide 66, polyamide 6, polyamide 46, polyamide 6/66, polyamide 10, polyamide 612, polyamide 11, polyamide 12, polyamide 66/6T composed of hexamethylenediamine, adipic acid and terephthalic acid, and polyamide 6I/6T composed of hexamethylenediamine, isophthalic acid and terephthalic acid. The amount of these resins contained is preferably 5 % by mass or less, more preferably 1 % by mass or less of the polyamide resin composition.

Elastomer components that can be used include, for example, known elastomers such as polyolefin elastomers, diene elastomers, polystyrene elastomers, polyamide elastomers, polyester elastomers, polyurethane elastomers, fluorinated elastomers, silicone elastomers, preferably polyolefin elastomers and polystyrene elastomers. These elastomers also preferably include those modified with $\alpha$, $\beta$-unsaturated carboxylic acids and their anhydrides, acrylamides and derivatives thereof in the presence or absence of a radical initiator to impart compatibility with the polyamide resin.

The amount of such other polyamide resins or elastomer components contained is typically 30 % by mass or less, preferably 20 % by mass or less, especially 10 % by mass or less of the polyamide resin composition.

In the polyamide resin composition described above, one polyamide resin or a blend of multiple polyamide resins can be used.

Further, the polyamide resin composition used in the present invention can contain one or a blend of two or more of resins such as polyester resins, polyolefin resins, polyphenylene sulfide resins, polycarbonate resins, polyphenylene ether resins, polystyrene resins so far as the purposes and advantages of the present invention are not adversely affected. The amount of them contained is preferably 10 % by mass or less, more preferably 1 % by mass or less of the polyamide resin composition.

Further, the polyamide resin composition used in the present invention can contain additives including stabilizers such as antioxidants and heat stabilizers, hydrolysis resistance improvers, weather stabilizers, matting agents, UV absorbers, nucleating agents, plasticizers, dispersing agents, flame retardants, antistatic agents, discoloration inhibitors, anti-gelling agents, colorants, release agents so far as the purposes and advantages of the present invention are not adversely affected. Detailed information about these additives can be found in paragraphs 0130 to 0155 of Japanese Patent No. 4894982.

<Continuous reinforcing fiber (B)>

The composite fibers of the present invention comprise a continuous reinforcing fiber (B). The continuous reinforcing fiber (B) refers to a continuous reinforcing fiber having a fiber length greater than 6 mm. The average fiber length of the continuous reinforcing fiber used in the present invention is preferably in the range of 1 to 10,000 m, more preferably 100 to 7,000 m, even more preferably 1,000 to 5,000 m to improve moldability.

Typically, the continuous reinforcing fiber (B) used in the present invention is a continuous reinforcing fiber bundle composed of multiple filaments of the continuous reinforcing fiber (B) .

Preferably, the total fineness of the continuous reinforcing fiber (B) used in the present invention to form one composite fiber yarn is 100 to 50000 dtex, more preferably 500 to 40000 dtex, even more preferably 1000 to 10000 dtex, especially preferably 1000 to 3000 dtex. When the total fineness is in such ranges, processing is easier and the resulting composite fiber has higher elastic modulus and strength.

Preferably, the total number of filaments of the continuous reinforcing fiber (B) used in the present invention to form one composite fiber yarn is 500 to 50000 filaments, more preferably 500 to 20000 filaments, even more preferably 1000 to 10000 filaments, especially preferably 1500 to 3500 filaments. When the total number is in such ranges, the dispersion state of the continuous reinforcing fiber (B) in the composite fiber further improves.

One composite fiber yarn may be prepared using one continuous reinforcing fiber bundle or multiple continuous reinforcing fiber bundles in order that the continuous reinforcing fiber may satisfy predetermined total fineness and total number of filaments. In the present invention, one composite fiber is preferably prepared using 1 to 10 continuous reinforcing fiber bundles, more preferably 1 to 3 continuous reinforcing fiber bundles, even more preferably one continuous reinforcing fiber bundle.

The average tensile modulus of the continuous reinforcing fiber bundle contained in the composite fibers of the present invention is preferably 50 to 1000 GPa, more preferably 200 to 700 GPa. When the tensile modulus is in such ranges, the tensile modulus of the composite fibers as a whole further improves.

Examples of the continuous reinforcing fiber (B) include glass fibers; carbon fibers; plant fibers (including kenaf, bamboo fibers); inorganic fibers such as alumina fibers, boron fibers, ceramic fibers, and metallic fibers (steel fibers); organic fibers such as aramid fibers, polyoxymethylene fibers, aromatic polyamide fibers, polyparaphenylene benzobisoxazole fibers, and ultra-high molecular weight polyethylene fibers. Among them, carbon fibers and glass fibers are preferably used, more preferably carbon fibers because they have excellent properties including high strength and high elastic modulus in spite of the light weight. Carbon fibers that can preferably be used include polyacrylonitrile-based carbon fibers and pitch-based carbon fibers. Further, carbon fibers produced from plant-derived materials such as lignin and cellulose can also be used.

<<Treating agent for the continuous reinforcing fiber (B) containing a functional group reactive with the polyamide resin>>

Preferably, the continuous reinforcing fiber (B) used in the present invention is treated with a treating agent (b) for the continuous reinforcing fiber (B) containing a functional group reactive with the polyamide resin. Typically, the functional group reactive with the polyamide resin is chemically bound to the polyamide resin during thermoforming. Such a treating agent (b) preferably has the function to combine filaments of the continuous reinforcing fiber (B) into a fiber bundle.

Specifically, examples preferably include epoxy resins such as bisphenol A type epoxy resins; and vinyl ester resins which are epoxy acrylate resins containing an acrylic or methacrylic group in one molecule such as bisphenol A type vinyl ester resins, novolac type vinyl ester resins, and brominated vinyl ester resins. Further, urethane-modified epoxy resins and urethane-modified vinyl ester resins are also included.

Among the above list, examples of the treating agent (b) used in the present invention preferably include epoxy alkanes, alkane diepoxides, bisphenol A diglycidyl ether, bisphenol A - alkylene oxide adduct, bisphenol A - alkylene oxide adduct diglycidyl ether, bisphenol A - dicyanate adduct, bisphenol F glycidyl ether, bisphenol F - alkylene oxide adduct, bisphenol F - alkylene oxide adduct diglycidyl ether, bisphenol F - dicyanate adduct, acrylic acid, methacrylic acid, crotonic acid, acrylic acid ester compounds, methacrylic acid ester compounds, crotonic acid ester compounds, ethylene glycol, diethylene glycol, triethylene glycol, 1,2-propylene glycol, 1,3-propylene glycol, 1,4-butanediol, neopentyl glycol, 1,4-butenediol, 1,5-pentanediol, 1,6-hexanediol, 1,4-cyclohexane dimethanol, dipropylene glycol, polyethylene glycol, polypropylene glycol, polytetraethylene glycol, bisphenol A, hydrogenated bisphenol A, bisphenol F, hydrogenated bisphenol F; trialkoxy- or triallyloxy-silane compounds such as aminopropyltriethoxysilane, phenylaminopropyltrimethoxysilane, glycidylpropyltriethoxysilane, methacryloxypropyltrimethoxysilane, and vinyltriethoxysilane; ureido silane, sulfide silane, vinyl silane, imidazole silane; more preferably bisphenol A diglycidyl ether, bisphenol A - alkylene oxide adduct, bisphenol A - alkylene oxide adduct diglycidyl ether, bisphenol A - dicyanate adduct, bisphenol F glycidyl ether, bisphenol F - alkylene oxide adduct, bisphenol F - alkylene oxide adduct diglycidyl ether, and bisphenol F - dicyanate adduct. When such a treating agent (b) is used, the resulting molded articles improve in the interfacial adhesion between the continuous reinforcing fiber (B) and the polyamide resin fiber (A), and therefore, tend to more effectively achieve advantages such as a reduction of voids, an increase in the elastic modulus or strength, and an improvement in fatigue properties.

The amount of the treating agent (b) is preferably 0.001 to 1.5 % by mass, more preferably 0.008 to 1.0 % by mass, even more preferably 0.1 to 0.8 % by mass of the continuous reinforcing fiber (B) . When the amount is in such ranges, the advantages of the present invention are achieved more effectively.

<<Method for treating the continuous reinforcing fiber (B) with the treating agent (b)>>

Known methods can be employed to treat the continuous reinforcing fiber (B) with the treating agent (b) . For example, a solution containing the treating agent (b) dissolved therein may be prepared and applied to deposit the treating agent (b) on the surface of the continuous reinforcing fiber (B), or the treating agent may be sprayed by air-blowing.

If a commercially available continuous reinforcing fiber (B) is used, it may have already been treated with a treating agent such as a surface-treating agent or a sizing agent. In this case, the commercially available continuous reinforcing fiber (B) should be treated by the method described above after such a treating agent has been washed away.

<Processes for preparing the composite fibers>

Next, an example of a process for preparing a composite fiber of the present invention is described below.

First, yarn rolls of a polyamide resin fiber bundle obtained by surface-treating a polyamide resin fiber (A) with a treating agent (a) and a continuous reinforcing fiber (B) (preferably a fiber bundle obtained by surface-treating a continuous reinforcing fiber (B) with a treating agent (b)) are provided. One or more than one yarn roll may be provided for each of the polyamide resin fiber bundle and the continuous reinforcing fiber bundle. The number of yarn rolls should preferably be controlled as appropriate so that the ratio between the numbers of filaments and the ratio between the finenesses of the polyamide resin fiber and the continuous reinforcing fiber may be desired values in the composite fiber.

Fig. 2 is a schematic diagram showing embodiments of yarn rolls during the preparation of a composite fiber of the present invention, in which 4 represents a yarn roll of a continuous reinforcing fiber bundle, 5 represents a yarn roll of a polyamide resin fiber bundle, and 6 represents a yarn roll of a composite fiber. It should be noted that Fig. 2 is a schematic diagram and does not show the step of opening or homogenizing the polyamide resin fiber bundle and the continuous reinforcing fiber bundle. Fig. 2 (a) is a schematic diagram showing that one composite fiber yarn is formed from two polyamide resin fiber bundles drawn from two yarn rolls 5 of the fiber bundles and one continuous reinforcing fiber bundle drawn from one yarn roll 4 of the continuous reinforcing fiber bundle and wound up into one yarn roll 6. The ratio between polyamide resin fiber bundles and continuous reinforcing fiber bundles here is preferably controlled as appropriate so that the ratio between the numbers of filaments in the composite fiber may be a desired value because it depends on the numbers of filaments and the finenesses of the fiber bundles used. Alternatively, multiple composite fiber yarns may be formed at once. Fig. 2 (b) is a schematic diagram showing a case in which multiple composite fiber yarns are prepared at once. In Fig. 2 (b), continuous reinforcing fiber bundles drawn from three yarn rolls 4 and polyamide resin fiber bundles drawn from three different yarn rolls 5 are combined to form three composite fiber yarns at the same time. In Fig. 2(b), the number of yarn rolls of polyamide resin fiber bundles and the number of yarn rolls of continuous reinforcing fiber bundles also should preferably be controlled as appropriate so that each composite fiber may satisfy desired values for the ratio between the numbers of filaments and the finenesses of the polyamide resin fiber and the continuous reinforcing fiber.

Polyamide resin fiber bundles and continuous reinforcing fiber bundles are each drawn from yarn rolls and opened by a known method. Examples of opening methods include vibration, stress, air-blowing. Polyamide resin fiber bundles and continuous reinforcing fiber bundles are combined into one bundle as the polyamide resin fiber bundles and the continuous reinforcing fiber bundles are opened, and the bundles are further homogenized by applying vibration, stress, air-blowing to form a composite fiber yarn. Then, the resulting yarn is typically wound up into a yarn roll by a winder. According to the present invention, the continuous reinforcing fiber (B) can be well dispersed by opening the polyamide resin fiber to homogenize it with the continuous reinforcing fiber (B) because the polyamide resin fiber bundle has been treated with a specific amount of a treating agent (a). Especially, more improved dispersion can be achieved when the continuous reinforcing fiber (B) has also been treated with a treating agent (b).

<Molded articles using the composite fibers>

The composite fibers according to the present invention can be used as weave fabrics or knitted fabrics by a known method. The types of weave fabrics include any of plain weave fabric, 8-harness satin weave fabric, 4-harness satin weave fabric, twill weave fabric. So-called bias weave fabric may also be included. Further, so-called non-crimp weave fabrics having substantially no crimp as described in JPA-S55-30974 may also be included.

The knitted fabrics include known knitting methods such as warp knitting, weft knitting, Raschel knitting.

Further, the composite fibers of the present invention can also be used as tape-like or sheet-like substrates formed by unidirectionally aligning them or laminates obtained by laminating two or more such substrates.

The molded articles of the present invention can be conveniently applied as parts of, for example, electronic/electric equipment such as personal computers, office automation equipment, audiovisual equipment, cellular phones; optical equipment, precision equipment, toys, household and office electrical appliances; as well as parts of automobiles, airplanes, ships. Especially, the present invention is suitable for preparing molded articles having recessed or raised features.

EXAMPLES

1. Preparation of surface-treated polyamide resin fibers (starting materials A)

<Polyamide resins>

The polyamide resins obtained in the following Preparation examples were used.

<<Preparation example 1>>

(Synthesis of a polyamide (MXD10))

In a reaction vessel, sebacic acid (available under the product name sebacic acid TA from Itoh Oil Chemicals Co., Ltd.) was melted by heating at 170 °C and then the temperature was raised to 210 °C while m-xylylenediamine (from Mitsubishi Gas Chemical Company, Inc.) was gradually added dropwise in a molar ratio of 1:1 to sebacic acid under pressure (0.4 Mpa) while stirring the contents. After completion of the dropwise addition, the pressure was lowered to 0.078 MPa and the reaction was continued for 30 minutes to control the amount of the polyamide resin having a molecular weight of 1,000 or less. After completion of the reaction, the contents were collected in the form of strands and pelletized in a pelletizer to give a polyamide (MXD10) . This is hereinafter designated as "MXD10".

<<Preparation example 2>>

(Synthesis of a polyamide (MPXD10))

In a reaction vessel in a nitrogen atmosphere, sebacic acid was melted by heating and then the temperature was raised to 235 °C while a mixed diamine of p-xylylenediamine (from Mitsubishi Gas Chemical Company, Inc.) and m-xylylenediamine (from Mitsubishi Gas Chemical Company, Inc.) in a molar ratio of 3:7 was gradually added dropwise in a molar ratio of the diamine to sebacic acid of about 1:1 under pressure (0.35 Mpa) while stirring the contents. After completion of the dropwise addition, the reaction was continued for 60 minutes to control the amount of the polymide resin having a molecular weight of 1,000 or less. After completion of the reaction, the contents were collected in the form of strands and pelletized in a pelletizer to give a polyamide (MPXD10) . This is hereinafter designated as "MPXD10".

<<Preparation example 3>>

(Synthesis of a polyamide (PXD10))

A reaction vessel having an internal volume of 50 L equipped with a stirrer, a partial condenser, a total condenser, a thermometer, a dropping device and a nitrogen inlet as well as a strand die was charged with precisely weighed 8950 g (44.25 mol) of sebacic acid (available under the product name sebacic acid TA from Itoh Oil Chemicals Co., Ltd.),

12.54 g (0.074 mol) of calcium hypophosphite, and 6.45 g (0.079 mol) of sodium acetate. The inside of the reaction vessel was thoroughly purged with nitrogen and then pressurized with nitrogen to 0.4 MPa and heated from 20 °C to 190 °C with stirring to homogeneously melt sebacic acid for 55 minutes. Then, 5960 g (43.76 mol) of p-xylylenediamine (from Mitsubishi Gas Chemical Company, Inc.) was added dropwise with stirring over 110 minutes. During then, the temperature in the reaction vessel was continuously raised to 293 °C. During the dropwise addition step, the pressure was controlled at 0.42 MPa and the water generated was removed outside the system through the partial condenser and the total condenser. The temperature in the partial condenser was controlled in the range of 145 to 147 °C. After completion of the dropwise addition of p-xylylenediamine, polycondensation reaction was continued for 20 minutes while the pressure in the reaction vessel was kept at 0.42 MPa. During then, the temperature in the reaction vessel was raised to 296 °C. Then, the pressure in the reaction vessel was lowered from 0.42 MPa to 0.12 MPa for 30 minutes. During then, the internal temperature was raised to 298 °C. Then, the pressure was lowered at a rate of 0.002 MPa/min to 0.08 MPa for 20 minutes to control the amount of the polyamide resin having a molecular weight of 1,000 or less. At the end of depressurization, the temperature in the reaction vessel was 301 °C. Then, the inside of the system was pressurized with nitrogen, and a polymer was collected in the form of strands from the strand die at an internal temperature in the reaction vessel of 301 °C and a resin temperature of 301 °C, cooled in cooling water at 20 °C and pelletized to give about 13 kg of a polyamide resin. The cooling time in cooling water here was 5 seconds, and the strand take-up rate was 100 m/min. This is hereinafter designated as "PXD10".

Various properties of the polyamide resins were determined according to the description in paragraphs 0157 to 0168 of Japanese Patent No. 4894982.

Various performances of the polyamide resins obtained are shown in the table below.

[Table 1]

| Kind of polyamide resin (A) | | MXD10 | MPXD10 | PXD10 |
|---|---|---|---|---|
| [COOH] | Micro equivalent/g | 62 | 110 | 205 |
| [$NH_2$] | Micro equivalent/g | 44 | 40 | 17 |
| [$NH_2$]/[COOH] | - | 0.71 | 0.36 | 0.08 |
| Mn | - | 18868 | 13333 | 9009 |
| Content of component having a molecular weight of 1,000 or less | % by mass | 0.70 | 0.75 | 1.33 |
| Mw/Mn | - | 1.97 | 2.00 | 2.55 |
| Melt viscosity | Pa·s | 1130 | 191 | 87 |
| Flexural modulus upon water absorption | % | 89 | 93 | 100 |
| Melting point | °C | 190 | 215 | 280/290 |
| Glass transition point | °C | 60 | 63 | 75 |
| Content of cyclic compound | % by mass | 0.1 | 0.12 | 0.5 |
| Water absorption rate | % by mass | 0.36 | 0.42 | 0.49 |
| Reaction molar ratio | - | 0.9973 | 0.9894 | 0.9718 |

<Conversion of the polyamide resins into fibers>

The polyamide resins obtained as described above were converted into fibers according to the following method.

Each polyamide resin dried at 150 °C for 7 hours using a vacuum dryer was melt-extruded in a single-screw extruder having a 30 mmφ screw to form strands through a die and the strands were drawn while they were taken up by a roller to give a polyamide resin fiber bundle. The number of filaments of the polyamide resin fiber bundle (A) was controlled by adjusting the number of holes of the die. Further, the fineness was controlled to a predetermined value by adjusting the diameter of the holes of the die.

<<Fiber diameter>>

A corss-section of the continuous thermoplastic resin fiber was observed with a scanning electron microscope (SEM), and the diameters at random ten points of the fiber were measured to calculate the average.

<<Fineness>>

The weight per one meter of the fiber was measured, and converted into a fineness.

<Treating agents (a)>

The following treating agents (a) for the polyamide resin fiber bundles (A) were used.

Treating agent a1: Polyoxyethylene sorbitan monostearate (tween 60 from Tokyo Chemical Industry Co., Ltd.);
Treating agent a2: A mixture of saturated and unsaturated fatty acid esters having carobn atoms 8 to 18 (EXCEPARL MC from Kao Corporation);
Treating agent a3: Polyoxyethylene hydrogenated castor oil (EMANON 1112 from Kao Corporation).

<Surface treatment of the polyamide resin fiber bundles (A) >

The polyamide resin fiber bundles (A) formed into fibers as described above were submerged in a solution of each type of treating agent (a) shown in the tables below dissolved in a solvent (water or methanol) to treat the surfaces of the polyamide resin fiber bundles (A) (starting materials (A)). The solvent used here was water for the treating agent a1, methanol for the treating agent a2, or water for the treating agent a3. Further, the amount of the treating agent (a) relative to the polyamide resin fiber bundles (A) was controlled by modifying the concentration of the solution containing the treating agent (a).

The amount of the treating agent (a) deposited on the polyamide resin fiber bundles (A) was determined by the following method. First, a length of each surface-treated polyamide resin fiber (starting material (A)) was cut out and measured for its weight (X). The weighed starting material (A) was immersed in water or methanol to dissolve the treating agent (a) in it. Water or methanol was evaporated off, and the residue was collected and measured for its weight (Y). The amount of the treating agent (a) was determined by Y/X*100 (expressed in % by mass). The value obtained was reported as "Amount of treating agent (a)" in the tables below.

2. Preparation of surface-treated continuous reinforcing fibers (starting materials (B))

Surface-treated continuous reinforcing fibers (starting materials (B)) were prepared according to the following method.

<Continuous reinforcing fibers (B)>

The following continuous reinforcing fibers were used after they have been cleaned.

C Fiber 1: Polyacrylonitrile carbon fiber composed of 3000 filaments and having a fineness of 1980 dtex and a flexural modulus of 230 GPa available as TORAYCA T300-3000 from Toray Industries, Inc.;
C Fiber 2: Polyacrylonitrile carbon fiber composed of 60000 filaments and having a fineness of 32000 dtex and a flexural modulus of 234 GPa available as PYROFIL from MITSUBISHI RAYON CO., LTD.

<Treating agent (b)>

The following treating agent for the continuous reinforcing fiber (B) was used.
Treating agent b1: Bisphenol A - alkylene oxide adduct diglycidyl ether.

<Surface treatment of the continuous reinforcing fibers (B)>

The continuous reinforcing fibers were immersed in methyl ethyl ketone, and ultrasonically cleaned for 30 minutes. The cleaned continuous reinforcing fibers (B) were taken out, and dried at 60 °C for 3 hours. Then, the fibers were submerged in a solution containing the treating agent (b) in methyl ethyl ketone shown in the tables, and dried by air-blowing at 23 °C for 10 minutes to give surface-treated continuous reinforcing fibers (B) (starting materials (B)). The amount of the treating agent (b) relative to the continuous reinforcing fibers (B) here was controlled by modifying the concentration of the solution containing the treating agent (b) in methyl ethyl ketone.

The amount of the treating agent (b) deposited on the continuous reinforcing fibers (B) was determined by the following method. First, a length of each surface-treated continuous reinforcing fiber (starting material (B)) was cut out and measured for its weight (X). The weighed starting material (B) was immersed in methyl ethyl ketone to dissolve the treating agent (b) in it. Methyl ethyl ketone was evaporated off, and the residue was collected and measured for its weight (Y) . The amount of the treating agent (b) was determined by Y/X*100 (expressed in % by mass). The value obtained was reported as "Amount of treating agent (b)" in the tables below.

3. Preparation of composite fibers

Composite fibers were prepared according to the following method.

Each starting material (A) and starting material (B) was drawn from the numbers of yarn rolls shown in the tables, and opened by air-blowing. While opening, the starting material (A) and starting material (B) were commingled into one bundle and further homogenized by air-blowing to form a composite fiber.

<Determination of the dispersity of the continuous reinforcing fiber (B)>

The dispersity of the continuous reinforcing fiber (B) was determined by observation as follows.

A length of each composite fiber was cut out and embedded in an epoxy resin, and the surface corresponding to a cross-section of the composite fiber was polished and an image of the cross-section was taken using the ultra-deep color 3D profile measuring microscope VK-9500 (controller)/VK-9510 (measuring unit) (from Keyence Corporation). In the image taken, the cross-sectional area of the composite fiber, the total of areas of 31400 $\mu m^2$ or more solely occupied by the continuous reinforcing fiber in the cross-section of the composite fiber, and the total of areas of 31400 $\mu m^2$ or more solely occupied by the resin fiber in the cross-section of the composite fiber were measured to calculate the dispersity by the formula below:

$$D(\%)=(1-(Lcf+Lpoly)/Ltot)*100$$

wherein D represents the dispersity, Ltot represents the cross-sectional area of the composite fiber, Lcf represents the total of areas of 31400 $\mu m^2$ or more solely occupied by the continuous reinforcing fiber in the cross-section of the composite fiber, and Lpoly represents the total of areas of 31400 $\mu m^2$ or more solely occupied by the resin fiber in the cross-section of the composite fiber.

The results are shown in the tables below.

[Table 2]

| | Example 1 | Example 2 | Example 3 | Example 4 |
|---|---|---|---|---|
| Kind of polyamide resin | MXD10 | MXD10 | MXD10 | MXD10 |
| Kind of treating agent (a) | a1 | a1 | a1 | a2 |
| Content of treating agent (a) (% by mass) | 1.2 | 1.2 | 1.2 | 1 |
| Kind of continuous reinforcing fiber | C Fiber 1 | C Fiber 1 | C Fiber 1 | C Fiber 1 |
| Kind of treating agent (b) | b1 | b1 | b1 | b1 |
| Content of treating agent (b) (% by mass) | 0.4 | 0.01 | 1.5 | 0.4 |
| Starting materials (A) | 360dtex/36f 6 bundles Total 2160dtex/216f | 360dtex/36f 6 bundles Total 2160dtex/216f | 360dtex/36f6 bundles Total 2160dtex/216f | 235dtex/34f 9 bundles Total 2115dtex/306f |
| Starting materials (B) | 1980dtex/3000f 1 bundles | 1980dtex/3000f 1 bundles | 1980dtex/3000f 1 bundles | 1980dtex/3000f 1 bundles |
| Total fineness of composite fiber (dtex) | 4140 | 4140 | 4140 | 4095 |
| Total fineness of (A) / Total fineness of (B) | 1.091 | 1.091 | 1.091 | 1.068 |

(continued)

| | Example 1 | Example 2 | Example 3 | Example 4 |
|---|---|---|---|---|
| Total number of filaments in Composite fiber (f) | 3216 | 3216 | 3216 | 3306 |
| Number of filaments of (A)/ Number of filaments of (B) | 0.0720 | 0.0720 | 0.0720 | 0.1020 |
| Dispersity of continuous reinforcing fiber (B) | 60 | 70 | 40 | 70 |
| Example 5 | | Example 6 | Example 7 | Example 8 |
| MXD10 | | MXD10 | MXD10 | MXD10 |
| a2 | | a2 | a2 | a2 |
| 1 | | 1 | 1 | 0.1 |
| C Fiber 1 | | C Fiber 1 | C Fiber 2 | C Fiber 1 |
| b1 | | b1 | b1 | b1 |
| 0.4 | | 0.4 | 0.4 | 0.4 |
| 235dtex/34f 44 bundles Total 10340dtex/ 1496f | | 235dtex/34f 1 bundles Total 235dtex/34f | 235dtex/34f 37 bundles Total 8695dtex/1258f | 235dtex/34f 9 bundles Total 2115dtex/306f |
| 1980dtex/3000f 1 bundles | | 1980dtex/3000f 1 bundles | 32000dtex/60000f 1 bundles | 1980dtex/3000f 1 bundles |
| 12320 | | 2215 | 40695 | 4095 |
| 5.222 | | 0.119 | 0.272 | 1.068 |
| 4496 | | 3034 | 61258 | 3306 |
| 0.4987 | | 0.0113 | 0.0210 | 0.1020 |
| 40 | | 40 | 40 | 40 |

[Table 3]

| | Example 9 | Example 10 | Example 11 | Example 12 |
|---|---|---|---|---|
| Kind of polyamide resin | MXD10 | MXD10 | MXD10 | MPXD10 |
| Kind of treating agent (a) | a2 | a2 | a2 | a2 |
| Content of treating agent (a) (% bv mass) | 2 | 1 | 1 | 1 |
| Kind of continuous reinforcing fiber | C Fiber 1 | C Fiber 1 | C Fiber 1 | C Fiber 1 |
| Kind of treating agent (b) | b1 | b1 | b1 | b1 |
| Content of treating agent (b) (% by mass) | 0.4 | 0.4 | 0.4 | 0.4 |

(continued)

| | Example 9 | Example 10 | Example 11 | Example 12 |
|---|---|---|---|---|
| Starting materials (A) | 235dtex/34f 9 bundles Total 2115dtex/306f | 52dtex/8f 28 bundles Total 1456dtex/224f | 500dtex/34f 4 bundles Total 2000dtex/136f | 235dtex/34f 9 bundles Total 2115dtex/306f |
| Starting materials (B) | 1980dtex/3000f 1 bundles | 1980dtex/3000f 1 bundles | 1980dtex/3000f 1 bundles | 1980dtex/3000f 1 bundles |
| Total fineness of composite fiber (dtex) | 4095 | 3436 | 3980 | 4095 |
| Total fineness of (A) / Total fineness of (B) | 1.068 | 0.735 | 0.253 | 1.068 |
| Total number of filaments in Composite fiber (f) | 3306 | 3224 | 3136 | 3306 |
| Number of filaments of (A)/ Number of filaments of (B) | 0.1020 | 0.0747 | 0.0453 | 0.1020 |
| Dispersity of continuous reinforcing fiber (B) | 40 | 50 | 40 | 70 |
| Example 13 | | Example 14 | Comparative Example 1 | Comparative Example 2 |
| PXD10 | | MXD10 | MXD10 | MXD10 |
| a2 | | a3 | a2 | a2 |
| 1 | | 1.2 | 0.01 | 3 |
| C Fiber 1 | | C Fiber 1 | C Fiber 1 | C Fiber 1 |
| b1 | | b1 | b1 | b1 |
| 0.4 | | 0.4 | 0.4 | 0.4 |
| 235dtexf34f 9 bundles Total 2115dtex/306f | | 360dtex/36f 6 bundles Total 2160dtex/216f | 235dtex/34f 9 bundles Total 2115dtex/306f | 235dtex/34f 9 bundles Total 2115dtex/306f |
| 1980dtex/3000f 1 bundles | | 1980dtex/3000f 1 bundles | 1980dtex/3000f 1 bundles | 1980dtex/3000f 1 bundles |
| 4095 | | 4140 | 4095 | 4095 |
| 1.068 | | 1.091 | 1.068 | 1.068 |
| 3306 | | 3216 | 3306 | 3306 |
| 0.1020 | | 0.0720 | 0.1020 | 0.1020 |
| 70 | | 50 | 10 | 10 |

In the tables above, the rows titled "Starting material (A)" indicate the fineness and the number of filaments per polyamide resin fiber bundle used in each upper row, and the number of yarns (the number of yarn rolls) used in each middle row. The total fineness and the total number of filaments of the polyamide resin fiber used to prepare one composite fiber yarn are shown in each lower row.

The rows rows titled "Starting material (B)" indicate the fineness and the number of filaments per continuous reinforcing fiber bundle, and the number of yarns (the number of yarn rolls) used.

The total fineness of composite fiber refers to the total fineness of the starting materials used for the preparation (the sum of the total fineness of the polyamide resin fiber (A) and the total fineness of the continuous reinforcing fiber (B)). Similarly, the total number of filaments of composite fiber refers to the total number of filaments of the starting materials used for the preparation (the sum of the total number of filaments of the polyamide resin fiber (A) and the total number of filaments of the continuous reinforcing fiber (B)).

It is apparent from the results shown above that when the amount of the treating agent (a) for the polyamide resin fiber bundle (A) is 0.1 % by mass of the total amount of the polyamide resin fiber, the dispersity of the continuous reinforcing fiber (B) is as high as 40 (Example 8), but when the amount of the treating agent (a) is 0.01 % by mass, the dispersity significantly decreases to 10 (Comparative example 1). When the amount of the treating agent (a) is 2 % by mass, the dispersity is as high as 40 (Example 9), but when the amount of the treating agent (a) is 3 % by mass, the dispersity significantly decreases to 10 (Comparative example 2). This means that the amount of the treating agent (a) greatly influences the advantages of the present invention. Further, it is shown that the advantages of the present invention are achieved irrespective of the type of the treating agent (a) (Examples 1 to 3 vs. Examples 4 to 13 vs. Example 14).

4. Preparation of weave fabric

The composite fiber obtained in Example 1 above was used as warp and weft to prepare a plain weave fabric. The density of the picks was 920 yarns/m. The weave faric obtained was heated at 280 °C, and then a piece of 1 cm x 10 cm was cut out at random to measure the flexural modulus according to JIS K7113. As a result, it was found to be 40 GPa.

5. Preparation of a knitted fabric

The composite fiber obtained in Example 1 above was used to make a knitted fabric having a basis weight of 300 g/m$^2$ by Raschel knitting.

DESCRIPTION OF THE REFERENCE NUMERALS

1: Composite fiber;
2: Polyamide resin fiber;
3: Continuous reinforcing fiber;
4: Yarn roll of a continuous reinforcing fiber bundle;
5: Yarn roll of a polyamide resin fiber bundle;
6: Yarn roll of a composite fiber.

## Claims

**1.** A composite fiber comprising (A) a polyamide resin fiber made from a polyamide resin composition, (B) a continuous reinforcing fiber, and (a) a treating agent for the polyamide resin fiber (A) ; wherein an amount of the treating agent (a) is 0.1 to 2.0 % by mass of the polyamide resin fiber (A); and
the polyamide resin composition comprises a polyamide resin containing a diamine structural unit, 50 mol % or more of which is derived from xylylenediamine, and having a number average molecular weight (Mn) of 6,000 to 30,000; and 0.5 to 5 % by mass of the polyamide resin has a molecular weight of 1,000 or less.

**2.** The composite fiber according to claim 1, further comprising (b) a treating agent for the continuous reinforcing fiber (B) containing a functional group reactive with the polyamide resin, wherein an amount of the treating agent (b) is 0.01 to 1.5 % by mass of the continuous reinforcing fiber (B).

**3.** The composite fiber according to claim 1 or 2, which has a dispersity of the continuous reinforcing fiber (B) of 40 to 100 in the composite fiber.

**4.** The composite fiber according to any one of claims 1 to 3, which is obtainable by using a polyamide resin fiber bundle having a fineness of 40 to 600 dtex and composed of 1 to 200 filaments.

**5.** The composite fiber according to any one of claims 1 to 4, wherein a ratio between a total fineness of the polyamide resin fiber (A) and a total fineness of the continuous reinforcing fiber (B) used to prepare one composite fiber yarn (a total fineness of the polyamide resin fiber (A) / a total fineness of the continuous reinforcing fiber (B)) is 0.1 to 10.

**6.** The composite fiber according to any one of claims 1 to 5, wherein a ratio between a total number of filaments of the polyamide resin fiber (A) and a total number of filaments of the continuous reinforcing fiber (B) used to prepare one composite fiber yarn (the total number of filaments of the polyamide resin fiber (A) / the total number of filaments of the continuous reinforcing fiber (B)) is 0.001 to 1.

**7.** The composite fiber according to any one of claims 1 to 6, wherein the treating agent (a) for the polyamide resin fiber (A) is selected from an ester compound, an alkylene glycol compound, a polyolefin compound and a phenyl ether compound.

**8.** A weave fabric or knitted fabric comprising a composite fiber according to any one of claims 1 to 7.

**9.** A composite material obtainable by thermally processing a composite fiber according to any one of claims 1 to 7 or a weave fabric or knitted fabric according to claim 8.

## Patentansprüche

**1.** Eine Verbundfaser, umfassend (A) eine Polyamidharzfaser, hergestellt aus einer Polyamidharzzusammensetzung, (B) eine endlose Verstärkungsfaser und (a) ein Behandlungsmittel für die Polyamidharzfaser (A); wobei eine Menge des Behandlungsmittels (a) 0,1 bis 2,0 Massen-% der Polyamidharzfaser (A) beträgt; und
die Polyamidharzzusammensetzung ein Polyamidharz umfasst, das eine Diamin-Struktureinheit enthält, von der 50 Mol-% oder mehr von Xylylendiamin abstammt, und ein Zahlenmittel des Molekulargewichts (Mn) von 6.000 bis 30.000 aufweist; und 0,5 bis 5 Massen-% des Polyamidharzes ein Molekulargewicht von 1.000 oder weniger aufweisen.

**2.** Die Verbundfaser nach Anspruch 1, weiter umfassend (b) ein Behandlungsmittel für die endlose Verstärkungsfaser (B), das eine mit dem Polyamidharz reaktive funktionelle Gruppe enthält, wobei eine Menge des Behandlungsmittels (b) 0,01 bis 1,5 Massen-% der endlosen Verstärkungsfaser (B) beträgt.

**3.** Die Verbundfaser nach Anspruch 1 oder 2, welche eine Dispersität der endlosen Verstärkungsfaser (B) von 40 bis 100 in der Verbundfaser aufweist.

**4.** Die Verbundfaser nach einem der Ansprüche 1 bis 3, welche erhältlich ist durch Verwendung eines Polyamidharzfaser-Bündels, das eine Feinheit von 40 bis 600 dtex aufweist und aus 1 bis 200 Filamenten besteht.

**5.** Die Verbundfaser nach einem der Ansprüche 1 bis 4, wobei ein Verhältnis zwischen einer Gesamtfeinheit der Polyamidharzfaser (A) und einer Gesamtfeinheit der endlosen Verstärkungsfaser (B), die zur Herstellung eines Verbundfasergarns verwendet werden, (eine Gesamtfeinheit der Polyamidharzfaser (A) / eine Gesamtfeinheit der endlosen Verstärkungsfaser (B)) 0,1 bis 10 beträgt.

**6.** Die Verbundfaser nach einem der Ansprüche 1 bis 5, wobei ein Verhältnis zwischen einer Gesamtzahl an Filamenten der Polyamidharzfaser (A) und einer Gesamtzahl an Filamenten der endlosen Verstärkungsfaser (B), die zur Herstellung eines Verbundfasergarns verwendet werden, (die Gesamtzahl an Filamenten der Polyamidharzfaser (A) / die Gesamtzahl an Filamenten der endlosen Verstärkungsfaser (B)) 0,001 bis 1 beträgt.

**7.** Die Verbundfaser nach einem der Ansprüche 1 bis 6, wobei das Behandlungsmittel (a) für die Polyamidharzfaser (A) ausgewählt ist aus einer Esterverbindung, einer Alkylenglycolverbindung, einer Polyolefinverbindung und einer Phenyletherverbindung.

**8.** Ein Gewebe oder eine Strickware, umfassend eine Verbundfaser nach einem der Ansprüche 1 bis 7.

**9.** Ein Verbundmaterial, erhältlich durch thermisches Verarbeiten einer Verbundfaser nach einem der Ansprüche 1 bis 7 oder eines Gewebes oder einer Strickware nach Anspruch 8.

## Revendications

1. Fibre composite comprenant (A) une fibre de résine polyamide fabriquée à partir d'une composition de résine polyamide, (B) une fibre de renforcement continue, et (a) un agent de traitement pour la fibre de résine polyamide (A) ; dans laquelle une quantité de l'agent de traitement (a) est de 0,1 à 2,0 % en masse de la fibre de résine polyamide (A) ; et
la composition de résine polyamide comprend une résine polyamide contenant un motif structural de diamine, dont 50 % en moles ou plus sont dérivés de xylylènediamine, et ayant un poids moléculaire moyen en nombre (Mn) de 6 000 à 30 000 ; et
0,5 à 5 % en masse de la résine polyamide a un poids moléculaire de 1 000 ou moins.

2. Fibre composite selon la revendication 1, comprenant en outre (b) un agent de traitement pour la fibre de renforcement continue (B) contenant un groupe fonctionnel réactif avec la résine polyamide, dans laquelle une quantité de l'agent de traitement (b) est de 0,01 à 1,5 % en masse de la fibre de renforcement continue (B).

3. Fibre composite selon la revendication 1 ou 2, qui présente une dispersité de la fibre de renforcement continue (B) de 40 à 100 dans la fibre composite.

4. Fibre composite selon l'une quelconque des revendications 1 à 3, qui peut être obtenue par utilisation d'un faisceau de fibres de résine polyamide ayant une finesse de 40 à 600 dtex et composé de 1 à 200 filaments.

5. Fibre composite selon l'une quelconque des revendications 1 à 4, dans laquelle un rapport entre une finesse totale de la fibre de résine polyamide (A) et une finesse totale de la fibre de renforcement continue (B) utilisée pour préparer un fil de fibre composite (finesse totale de la fibre de résine polyamide (A) / finesse totale de la fibre de renforcement continue (B)) est de 0,1 à 10.

6. Fibre composite selon l'une quelconque des revendications 1 à 5, dans laquelle un rapport entre un nombre total de filaments de la fibre de résine polyamide (A) et un nombre total de filaments de la fibre de renforcement continue (B) utilisés pour préparer un fil de fibre composite (nombre total de filaments de la fibre de résine polyamide (A) / nombre total de filaments de la fibre de renforcement continue (B)) est de 0,001 à 1.

7. Fibre composite selon l'une quelconque des revendications 1 à 6, dans laquelle l'agent de traitement (a) pour la fibre de résine polyamide (A) est choisi parmi un composé d'ester, un composé d'alkylène glycol, un composé de polyoléfine et un composé d'éther phénylique.

8. Tissu tissé ou tissu tricoté comprenant une fibre composite selon l'une quelconque des revendications 1 à 7.

9. Matériau composite pouvant être obtenu par traitement thermique d'une fibre composite selon l'une quelconque des revendications 1 à 7 ou d'un tissu tissé ou d'un tissu tricoté selon la revendication 8.

Fig. 1

1
2
3

Fig. 2

(a)

4
4
6
5

(b)

4
4
4
6
6
6
5
5
5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 4894982 B